# EUROPÄISCHE PATENTANMELDUNG

(11) **EP 3 292 803 A1**
(43) Veröffentlichungstag der Anmeldung: **14.03.2018**
(21) Anmeldenummer: 17189149.2
(22) Anmeldetag: 04.09.2017
(51) Int. Cl.: A47J 43/046, A47J 43/07

(54) **ZUBEREITUNGSGEFÄSS FÜR EINE ELEKTROMOTORISCH BETRIEBENE KÜCHENMASCHINE**

(30) Priorität: 09.09.2016 DE 102016116975
(71) Anmelder: Vorwerk & Co. Interholding GmbH, 42275 Wuppertal (DE)
(72) Erfinder: Cornelißen, Markus, 53332 Bornheim (DE)
(74) Vertreter: Müller, Enno

(57) **Zusammenfassung**

Die Erfindung betrifft ein Zubereitungsgefäß (1) mit einem Gefäßboden (2), einer Heizeinrichtung (3) und einem mit dem Gefäßboden (2) außenseitig verbindbaren Fußteil (4), wobei das Zubereitungsgefäß (1) über das Fußteil (4) mit einem Basisgerät (6) einer elektromotorisch betriebenen Küchenmaschine (5) verbindbar ist. Um das Zubereitungsgefäß (1) auch bei hohen Temperaturen verwenden zu können, wird vorgeschlagen, dass zwischen dem Gefäßboden (2) und dem Fußteil (4), insbesondere zwischen der Heizeinrichtung (3) und dem Fußteil (4), ein Hitzeschutzelement (7) mit einer Temperaturbeständigkeit von mindestens 160°C, insbesondere von mindestens 200°C, angeordnet ist.

## Beschreibung

### Gebiet der Technik

Die Erfindung betrifft ein Zubereitungsgefäß mit einem Gefäßboden, einer Heizeinrichtung und einem mit dem Gefäßboden außenseitig verbindbaren Fußteil, wobei das Zubereitungsgefäß über das Fußteil mit einem Basisgerät einer elektromotorisch betriebenen Küchenmaschine verbindbar ist.

Darüber hinaus betrifft die Erfindung eine elektromotorisch betriebene Küchenmaschine mit einem Basisgerät und einem mit dem Basisgerät verbindbaren Zubereitungsgefäß, wobei das Zubereitungsgefäß einen Gefäßboden, eine Heizeinrichtung und einen mit dem Gefäßboden außenseitig verbindbaren Fußteil aufweist.

### Stand der Technik

Zubereitungsgefäße und elektromotorisch betriebene Küchenmaschinen der vorgenannten Art sind im Stand der Technik bekannt.

Die Druckschrift WO 2003/001952 A2 offenbart bspw. eine elektromotorisch betriebene Küchenmaschine sowie ein Zubereitungsgefäß, bei welchem der Gefäßboden eine Heizeinrichtung in Form einer elektrischen Widerstandsheizung aufweist, welche in den Gefäßboden integriert ist. Zur elektrischen Kontaktierung der Widerstandsheizung sind über den Gefäßboden hinausragende Kontaktelemente vorgesehen, welche in einer in das Basisgerät eingesetzten Stellung des Zubereitungsgefäßes mit einer Stromversorgung verbindbar sind.

Des Weiteren ist es bspw. aus der EP 2 875 762 B1 bekannt, an dem Gefäßboden einen Fußteil anzuordnen, welcher zugleich ein durch den Gefäßboden in das Zubereitungsgefäß ragendes Rührwerk fixiert. Der Fußteil dient einerseits zur Befestigung des Rührwerkes an dem Zubereitungsgefäß, und zum anderen zur Abschirmung des heißen Gefäßbodens gegenüber einem versehentlichen Kontakt mit empfindlichen Flächen oder einem Nutzer der Küchenmaschine.

Da der Fußteil üblicherweise als Kunststoffteil ausgebildet ist, ist die Aufheizung des Gefäßbodens auf eine Temperatur begrenzt, welche nicht zu einer Materialveränderung führt.

### Zusammenfassung der Erfindung

Ausgehend von dem vorgenannten Stand der Technik ist es Aufgabe der Erfindung, ein Zubereitungsgefäß bzw. eine elektromotorisch betriebene Küchenmaschine mit einem derartigen Zubereitungsgefäß anzugeben, welches ein Aufheizen des Zubereitungsgefäßes mittels der Heizeinrichtung möglichst unabhängig von dem Material des Fußteils erlaubt.

Zur Lösung der vorgenannten Aufgabe wird zunächst ein Zubereitungsgefäß vorgeschlagen, bei welchem zwischen dem Gefäßboden und dem Fußteil, insbesondere zwischen der Heizeinrichtung und dem Fußteil, ein Hitzeschutzelement mit einer Temperaturbeständigkeit von mindestens 160°C, insbesondere von mindestens 200°C, angeordnet ist.

Erfindungsgemäß ist das Zubereitungsgefäß nun so ausgebildet, dass es während eines Heizvorgangs nicht zu einer Beeinträchtigung des Fußteils kommen kann, bspw. einem Anschmelzen des Fußteils. Das Zubereitungsgefäß weist nun zwischen dem Gefäßboden und dem Fußteil ein Hitzeschutzelement auf, welches die von der Heizeinrichtung abgestrahlte Wärme von dem Fußteil fernhält. Das Zubereitungsgefäß mitsamt dem Fußteil kann unverändert, wie bspw. im Stand der Technik beschrieben, hergestellt sein. Der Unterschied ist nun, dass an allen Stellen, wo das Fußteil direkt an dem Gefäßboden des Zubereitungsgefäßes anliegt, ein Hitzeschutzelement als thermischer Isolator vorhanden ist. Insbesondere ist das Hitzeschutzelement zwischen der Heizeinrichtung und dem Fußteil angeordnet. Grundsätzlich kann die Heizeinrichtung dabei in den Gefäßboden integriert sein, oder von außen an dem Gefäßboden angeordnet sein. Im erstgenannten Fall empfiehlt es sich bspw., dass die Heizeinrichtung eine Dickschichtheizung, oder eine andere Widerstandsheizung, ist. Das Hitzeschutzelement weist eine Temperaturbeständigkeit von mindestens 160°C, insbesondere von mindestens 200°C, auf. Diese Temperaturbeständigkeit ist ausreichend, um innerhalb des Zubereitungsgefäßes Medien mit einer Temperatur von 160°C zu erhitzen, ohne das Material des Fußteils negativ zu beeinflussen. Ggf. werden zwischen der Heizeinrichtung und dem Fußteil Temperaturen von mehr als 160°C erreicht, so dass eine demgegenüber höhere Temperaturbeständigkeit des Hitzeschutzelementes gewünscht sein kann, bspw. die vorgeschlagene Temperaturbeständigkeit von mindestens 200°C.

Es wird vorgeschlagen, dass das Hitzeschutzelement eine Silikonschicht, insbesondere eine fluorierte Silikonschicht, ist. Als thermischer Isolator wird somit Silikon vorgeschlagen, da dieses die gewünschte Temperaturbeständigkeit aufweist. Je nach der Art des verwendeten Silikons kann eine Temperaturbeständigkeit von bis zu 250°C oder gar bis zu 350°C erreicht werden. Zudem sind Silikone so herstellbar, dass diese den Anforderungen in Bezug auf Unbedenklichkeit und Gebrauchseignung für Lebensmittel gerecht werden. Die Silikonschicht weist vorzugsweise eine Dicke von nur wenigen Millimetern, bevorzugt eine Dicke von bis zu nur einem Millimeter auf, so dass die Silikonschicht besonders flexibel ist und in die Geometrie des Zubereitungsgefäßes inklusive des Fußteils eingebettet werden kann, ohne dass bauliche Änderungen erforderlich sind. Durch ihre Flexibilität passt sich die Silikonschicht der Geometrie des Zubereitungsgefäßes bzw. des Gefäßbodens und/oder des Fußteils an und ist somit besonders vorteilhaft integrierbar. Die Silikonschicht ist zudem vorteilhaft fluoriert, um eine bessere Gleitfähigkeit gegenüber dem Gefäßboden des Zubereitungsgefäßes zu schaffen, welcher üblicherweise aus Metall hergestellt ist. Üblicherweise gleitet Silikon relativ schlecht auf Metall. Dieser Nachteil wird durch die Fluorierung überwunden. Dies erleichtert die Anordnung des Hitzeschutzelementes an dem Zubereitungsgefäß, insbesondere die relative Verschiebung des Hitzeschutzelementes zu dem Gefäßboden und/oder ggf. auch einer Umfangswandung des Zubereitungsgefäßes.

Des Weiteren wird vorgeschlagen, dass das Hitzeschutzelement trennbar an dem Zubereitungsgefäß und/oder dem Fußteil angeordnet ist. Durch diese Ausbildung kann ein Nutzer das Hitzeschutzelement wahlweise von dem Zubereitungsgefäß trennen oder an diesem anbringen. Insbesondere kann das Hitzeschutzelement zum Zwecke eines Austausches oder zum Zwecke einer Reinigung des Zubereitungsgefäßes und/oder des Fußteils besonders einfach entfernt werden. Alternativ ist es andererseits selbstverständlich auch möglich, dass das Hitzeschutzelement ohne Zerstörung desselben nicht von dem Zubereitungsgefäß oder dem Fußteil trennbar ist. Bei dieser Ausgestaltung bilden das Zubereitungsgefäß und das Hitzeschutzelement bzw. der Fußteil und das Hitzeschutzelement eine Einheit. Diese Ausgestaltung erfordert keine Justage des Hitzeschutzelementes, wenn der Fußteil von dem Zubereitungsgefäß getrennt wird und anschließend wieder an diesem befestigt werden soll. Besonders vorteilhaft kann das Hitzeschutzelement bspw. an den Fußteil angespritzt sein oder dergleichen. Der Nutzer trennt den Fußteil dabei mitsamt des Hitzeschutzelementes von dem Zubereitungsgefäß, bspw. vor einer Reinigung in einer Geschirrspülmaschine.

Des Weiteren wird vorgeschlagen, dass das Hitzeschutzelement zumindest einen Teilbereich des Gefäßbodens bedeckt, insbesondere zumindest einen Teilbereich, welcher bei Abwesenheit des Hitzeschutzelementes einen direkten mechanischen Kontakt zu dem Fußteil aufweisen würde. Zumindest bedeckt das Hitzeschutzelement somit diejenigen nach außen weisenden Teilbereiche des Gefäßbodens, an welchen der Fußteil direkt anliegt und somit einer besonders hohen Temperatur ausgesetzt ist. Die zu bedeckenden Teilbereiche des Gefäßbodens sind somit zum einen durch die Geometrie des Gefäßbodens selbst bestimmt, zum anderen aber auch durch die Geometrie des Fußteils. Sofern es sich bei dem Gefäßboden bzw. dem Fußteil nicht um eine ebene Fläche handelt, sind insbesondere diejenigen Teilbereiche mittels des Hitzeschutzelementes zu bedecken, welche in Richtung des jeweils anderen Elementes, d.h. entweder in Richtung des Gefäßbodens oder in Richtung des Fußteils, hervorstehen.

Zudem wird vorgeschlagen, dass das Hitzeschutzelement zumindest einen Teilbereich einer Umfangswandung des Zubereitungsgefäßes bedeckt. Gemäß dieser Ausgestaltung liegt das Hitzeschutzelement nicht nur an dem Gefäßboden des Zubereitungsgefäßes an, sondern auch an dessen Umfangswandung. Besonders vorteilhaft kann das Hitzeschutzelement somit gleichzeitig über den Gefäßboden und die Umfangswandung geführt werden, wobei sich insbesondere eine Flexibilität des Hitzeschutzelementes, bspw. nach der Art einer Silikonschicht, empfiehlt. Dadurch ist der von unten an dem Gefäßboden angeordnete Fußteil gegen eine ungewünschte Hitzeeinwirkung geschützt ist. Vorteilhaft ist der Fußteil nach der Art eines nach oben offenen Gefäßes ausgebildet, welches den Gefäßboden und zumindest einen Teilbereich der Umfangswandung des Zubereitungsgefäßes sowie das zwischen dem Gefäßboden und dem Fußteil angeordnete Hitzeschutzelement aufnimmt. Dabei kann das Hitzeschutzelement entweder nur denjenigen Teilbereich der Umfangswandung bedecken, welcher im montierten Zustand des Zubereitungsgefäßes innerhalb des Fußteils angeordnet ist, oder auch einen darüber liegenden Teilbereich der Umfangswandung, welcher somit außerhalb des Fußteils liegt. Grundsätzlich ist die Umfangswandung bis zu einer frei wählbaren Höhe von dem Hitzeschutzelement bedeckbar. Dadurch wird zum einen die erfindungsgemäße thermische Isolierung erreicht, zum anderen jedoch auch eine akustische Isolierung, was insbesondere bei Zubereitungsgefäßen vorteilhaft ist, die ein innenliegendes Rührwerk aufweisen.

Es kann vorgesehen sein, dass die Umfangswandung eine Hinterschneidung und/oder eine Materialaussparung zur formkorrespondierenden Anlage des Hitzeschutzelementes aufweist. Die formkorrespondierende Anlage kann dabei vorteilhaft insbesondere durch eine Presspassung zwischen dem Hitzeschutzelement und der Umfangswandung des Zubereitungsgefäßes erreicht werden. Die Umfangswandung des Zubereitungsgefäßes kann dabei insbesondere in einem zu dem Gefäßboden benachbarten Bereich Hinterschnitte in Form von Sicken o. dgl. aufweisen, so dass das Hitzeschutzelement bei einer Presspassung daran haften bleibt. Bei dieser Ausgestaltung kann das Hitzeschutzelement dauerhaft an der Umfangswandung des Zubereitungsgefäßes angeordnet sein und mit diesem bspw. gleichzeitig einer Reinigung zugeführt werden. Vorteilhaft weist das Hitzeschutzelement dabei Öffnungen auf, durch welche bei einem Reinigungsvorgang zwischen die Umfangswandung und das Hitzeschutzelement gelangte Flüssigkeit wieder ausströmen kann. Gelegentlich kann das Hitzeschutzelement entgegen der Presspassung jedoch auch von der Umfangswandung entfernt werden.

Des Weiteren wird vorgeschlagen, dass zwischen dem Hitzeschutzelement und dem Fußteil ein Gleitelement aus einem Hartkunststoff angeordnet ist. Der Hartkunststoff kann insbesondere ein Thermoplast oder Duroplast sein. Durch diese Ausgestaltung wird es ermöglicht, dass der relativ zu dem Gefäßboden bzw. der Umfangswandung des Zubereitungsgefäßes bewegliche Fußteil leicht, d.h. widerstandsarm, entlang des Hitzeschutzelementes bewegbar ist. Das Gleitelement schließt sich - ausgehend von dem Gefäßboden bzw. der Umfangswandung - an das Hitzeschutzelement an, so dass dieses im montierten Zustand des Zubereitungsgefäßes zwischen dem Hitzeschutzelement und dem Fußteil angeordnet ist. Das Gleitelement stützt das Hitzeschutzelement, insbesondere wenn das Hitzeschutzelement aus Silikon hergestellt ist. Konstruktiv kann das Hitzeschutzelement mittels des Gleitelementes gestützt in dem Fußteil angeordnet sein, so dass ein Nutzer bei einem Entfernen des Fußteils von dem Gefäßboden gleichzeitig auch das Hitzeschutzelement und das Gleitelement entfernt. Es ist ausreichend, wenn das Gleitelement nur denjenigen Teilbereich des Hitzeschutzelementes bedeckt, welcher ohne das Gleitelement ansonsten an dem Fußteil anliegen würde. Jedoch kann es auch vorgesehen sein, dass das Gleitelement im Sinne eines Stützelementes darüber hinausgehend entlang der Umfangswandung angeordnet ist, um das Hitzeschutzelement zu stützen. Ob dies erforderlich ist, hängt nicht zuletzt von der Shore-Härte des Hitzeschutzelementes ab.

Es wird vorgeschlagen, dass der Fußteil zur Fixierung eines Rührwerkes ausgebildet ist. Das Rührwerk kann insbesondere ein Messerlager sein. Das Rührwerk weist - wie bspw. im Stand der Technik der EP 2 875 762 B1 beschrieben - durch eine Öffnung des Gefäßbodens in das Zubereitungsgefäß hinein. Eine Rührwerkwelle durchsetzt den Gefäßboden zur Ausbildung eines frei nach unten über den Gefäßboden hinausragenden Kupplungsmitnehmers. Das Rührwerk wird mittels des Fußteils an dem Zubereitungsgefäß fixiert, so dass keine relative Bewegung zueinander mehr möglich ist. In einem in eine elektromotorisch betriebene Küchenmaschine eingesetzten Zustand des Zubereitungsgefäßes greift der Kupplungsmitnehmer in eine maschinenseitige Kupplungsaufnahme ein, über welche das Rührwerk angetrieben wird. Die Fixierung des Rührwerkes an dem Zubereitungsgefäß erfolgt vorteilhaft durch eine Quetschverbindung zwischen dem Rührwerk und dem Fußteil, wobei das Rührwerk gleichzeitig an dem Gefäßboden festgesetzt wird.

Schließlich wird neben dem zuvor beschriebenen Zubereitungsgefäß ebenfalls eine elektromotorisch betriebene Küchenmaschine vorgeschlagen, welche ein Basisgerät und ein mit dem Basisgerät verbindbares Zubereitungsgefäß aufweist, insbesondere ein Zubereitungsgefäß der vorgenannten Art. Das Zubereitungsgefäß weist einen Gefäßboden, eine Heizeinrichtung und einen mit dem Gefäßboden außenseitig verbindbaren Fußteil aufweist, wobei das Zubereitungsgefäß über das Fußteil mit dem Basisgerät verbindbar ist und zwischen dem Gefäßboden und dem Fußteil, insbesondere zwischen der Heizeinrichtung und dem Fußteil, ein Hitzeschutzelement aufweist.

Die zuvor in Bezug auf das Zubereitungsgefäß vorgeschlagenen Merkmale und Vorteile gelten entsprechend auch für die elektromotorisch betriebene Küchenmaschine mit einem solchen Zubereitungsgefäß.

### Kurze Beschreibung der Zeichnungen

Im Folgenden wird die Erfindung anhand von Ausführungsbeispielen näher erläutert. Es zeigen:
- Fig. 1: eine elektromotorisch betriebene Küchenmaschine mit einem Basisgerät und einem darin eingesetzten Zubereitungsgefäß,
- Fig. 2: einen Bodenbereich des Zubereitungsgefäßes in einer Schnittdarstellung gemäß einer ersten Ausführungsform,
- Fig. 3: einen Bodenbereich des Zubereitungsgefäßes in einer Schnittdarstellung gemäß einer zweiten Ausführungsform.

### Beschreibung der Ausführungsformen

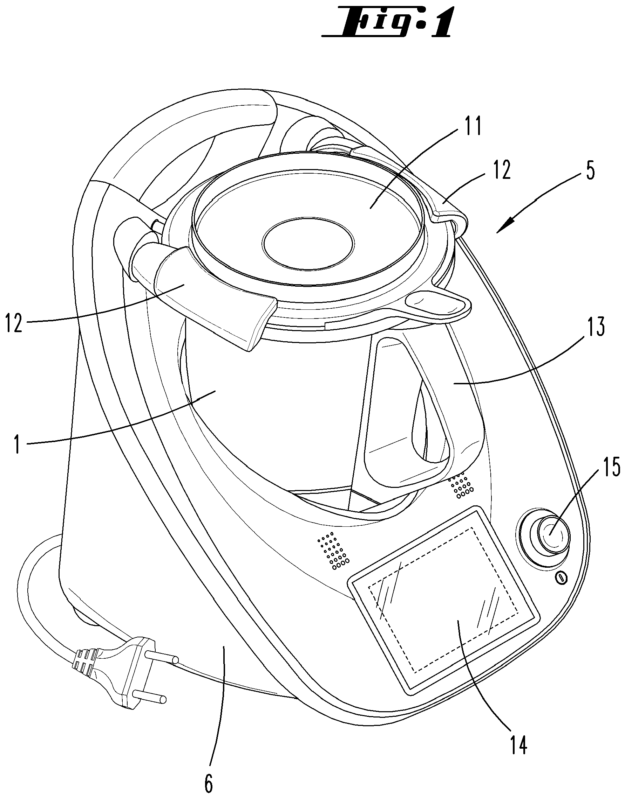

Die in Figur 1 dargestellte elektromotorisch betriebene Küchenmaschine 5 weist ein Basisgerät 6 auf, in welchem hier ein Zubereitungsgefäß 1 angeordnet ist. Das Basisgerät 6 verfügt über ein Display 14 zur Anzeige möglicher Zubereitungsfunktionen der Küchenmaschine 5 oder dergleichen, sowie über einen Schalter 15, welcher hier als Druck-Dreh-Knopf ausgebildet ist. Mittels des Schalters 15 kann einerseits die Küchenmaschine 5 an- und ausgeschaltet werden, und zum anderen eine Auswahl von Zubereitungsfunktionen getroffen werden, oder dergleichen. An dem Basisgerät 6 sind des Weiteren zwei Verriegelungswalzen 12 angeordnet, welche zur Verriegelung des Zubereitungsgefäßes 1 mit einem Deckel 11 dienen. Das hier dargestellte Zubereitungsgefäß 1 weist des Weiteren einen Griff 13 zum Erfassen des Zubereitungsgefäßes 1 durch einen Nutzer der Küchenmaschine 5 auf.

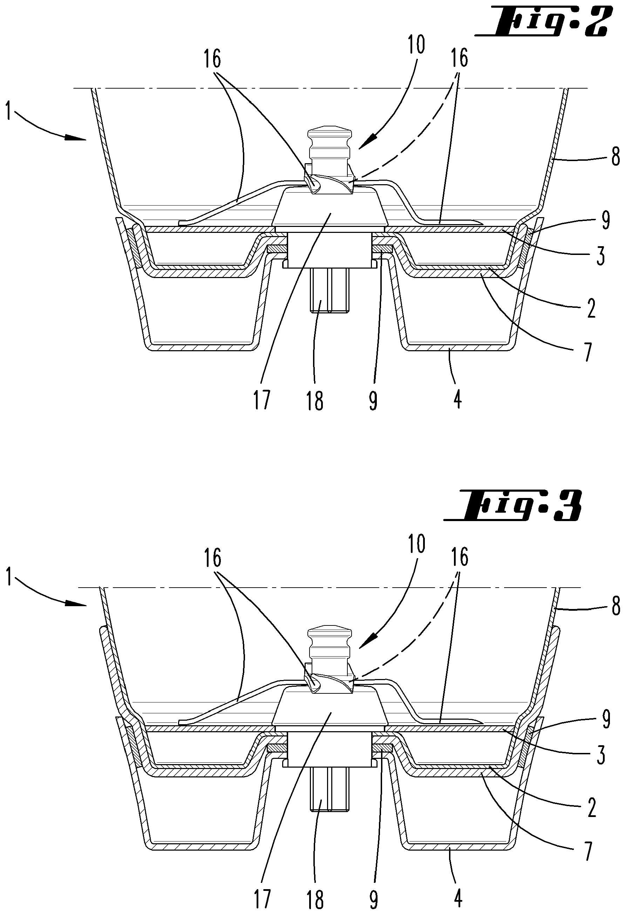

Die Figuren 2 und 3 zeigen einen unteren Teilbereich des Zubereitungsgefäßes 1 gemäß zwei unterschiedlichen beispielhaften Ausführungsformen.

Bei der in Figur 2 dargestellten ersten Ausführungsform verfügt das Zubereitungsgefäß 1 über einen Gefäßboden 2, welcher eine zentrale Öffnung zur Aufnahme eines Rührwerkes 10 aufweist, das durch die Öffnung hindurch in das Innere des Zubereitungsgefäßes 1 ragt. Das Rührwerk 10 weist hier ein Messerlager 17 mit einer Mehrzahl von Messern 16 und eine gegenüber dem Messerlager 17 rotierbare Welle 18 auf, welche eine drehfeste Verbindung zu den Messern 16 aufweist. Die Welle 18 ist mittels eines nicht dargestellten Antriebs der elektromotorisch betriebenen Küchenmaschine 5 rotierbar. Insbesondere eignet sich zum Antrieb ein Elektromotor. Das Zubereitungsgefäß 1 weist neben dem Gefäßboden 2 eine Umfangswandung 8 auf.

Der Gefäßboden 2 ist topfartig mit kreisrundem Querschnitt ausgebildet und trägt zentral im Inneren das Rührwerk 10. Im Bereich des Gefäßbodens 2 weist das Zubereitungsgefäß 1 des Weiteren eine Heizeinrichtung 3 auf, welche als elektrische Widerstandsheizung ausgebildet ist. Zur elektrischen Kontaktierung derselben sind nach vertikal unten über den Gefäßboden 2 hinausragend nicht näher dargestellte Kontaktelemente vorgesehen. In der in das Basisgerät 6 eingesetzten Stellung des Zubereitungsgefäßes 1 erfolgt hierüber die Stromversorgung der Heizeinrichtung 3, weiter bevorzugt auch eine Steuerung derselben.

Das Rührwerk 10 ist in dem dargestellten Ausführungsbeispiel an dem Zubereitungsgefäß 1 festlegbar. Hierzu weist das Messerlager 17 bspw. nach radial außen ragende Rastvorsprünge (nicht dargestellt) auf, welche in entsprechende Ausnehmungen des Gefäßbodens 2 eingreifen können. Diese Rastvorsprünge greifen des Weiteren über die Ebene des Gefäßbodens 2 hinaus, um mit einem als Fußteil 4 ausgebildeten Gegenrastmittel zusammenzuwirken.

Der als Gegenrastmittel dienende Fußteil 4 ist ein aus einem Hartkunststoffmaterial gefertigtes, topfartiges Aufnahmeteil, welches ebenfalls eine Öffnung zum Durchtritt des Rührwerkes 10 aufweist. Der Fußteil 4 weist Gegenrastmittel für die Fixierung des Rührwerkes 10 auf, so dass das Rührwerk 10 aufgrund einer Rotation des Fußteils 4 relativ zu dem Gefäßboden 2 an diesem festlegbar ist.

Zwischen dem Gefäßboden 2 bzw. einem Teil der Umfangswandung 8 und dem Fußteil 4 ist im Bereich der Heizeinrichtung 3 ein Hitzeschutzelement 7 angeordnet. Das Hitzeschutzelement 7 ist hier ein flexibles Silikonelement, welches aufgrund seiner Flexibilität nach der Art einer Presspassung an der Umfangswandung 8 bzw. dem Gefäßboden 2 haftet. Das Hitzeschutzelement 7 ist von dem Zubereitungsgefäß 1 trennbar und kann somit nach Entfernen des Fußteils 4 von dem Gefäßboden 2 getrennt werden. Um eine bessere Gleitfähigkeit gegenüber dem Material des Gefäßbodens 2 und der Umfangswandung 8, hier Metall, zu erreichen, ist das Hitzeschutzelement 7 fluoriert.

In dem Übergangsbereich zwischen dem Gefäßboden 2 bzw. der Umfangswandung 8 und dem Fußteil 4 ist des Weiteren ein Gleitelement 9 angeordnet, welches hier ringförmig zum einen zwischen dem Hitzeschutzelement 7 und dem Fußteil 4 benachbart zu dem Rührwerk 10 angeordnet ist, und zum anderen im Bereich der nach außen ragenden Umfangswandung 8 des Zubereitungsgefäßes 1. Das Gleitelement 9 ist hier somit zweiteilig nach der Art von zwei ringförmigen Elementen ausgebildet. Das Gleitelement 9 ist hier bspw. ein Thermoplast, wie Polyethylen oder Polycarbonat, welches eine optimale Gleitfähigkeit des Fußteils 4 relativ zu dem Hitzeschutzelement 7 sicherstellt. Das Gleitelement 9 und das Hitzeschutzelement 7 ragen nicht über den Fußteil 4 hinaus. Der Fußteil 4 ist somit gegenüber dem mittels der Heizeinrichtung 3 aufgeheizten Gefäßboden 2 im Wesentlichen nur an den Stellen isoliert, welche hauptsächlich der Hitze ausgesetzt sind und anderenfalls, d.h. ohne das Hitzeschutzelement 7, ggf. schmelzen könnten.

Das Hitzeschutzelement 7 weist hier bspw. eine Temperaraturbeständigkeit von 200°C auf und bildet eine Barriere für die von der Heizeinrichtung 3 bzw. dem Gefäßboden 2 und der Umfangswandung 8 ausgehende Wärmeenergie. Bei einer Temperatur der Heizeinrichtung 3 von bspw. 160°C, schirmt das Hitzeschutzelement 7 den Fußteil 4 derart ab, dass lediglich eine keine wesentliche Material- und/oder Formveränderung des Fußteils 4 verursachende Temperatur übertragen wird. Diese Temperatur kann bspw. in einem Temperaturbereich von 100°C liegen.

Figur 3 zeigt eine gegenüber Figur 2 abweichende Ausführungsform, bei welcher das Hitzeschutzelement 7 über den Fußteil 4 hinausragt und entlang der Umfangswandung 8 des Zubereitungsgefäßes 1 weitere Teilbereiche des Zubereitungsgefäßes 1 abdeckt. Bei dieser Ausgestaltung dient das Hitzeschutzelement 7 nicht nur als thermische Barriere, sondern auch als akustische Isolierung, bspw. für von dem Rührwerk 10 verursachte Geräusche. Das Hitzeschutzelement 7 ist auch hier aufgrund seiner Flexibilität über die Umfangswandung 8 gespannt, so dass dieses nach der Art einer Presspassung an der Umfangswandung 8 anliegt. Zusätzlich können Hinterschneidungen und/oder Aussparungen (nicht dargestellt) an der Umfangswandung 8 vorgesehen sein, in welche Teilbereiche des Hitzeschutzelementes 7 hineingepresst werden können. Dies ermöglicht einen optimalen Halt des Hitzeschutzelementes 7 an dem Zubereitungsgefäß 1.

Bei beiden vorgenannten Ausführungsformen ist es möglich, dass ein Nutzer der Küchenmaschine 5 das Hitzeschutzelement 7 und auch das Gleitelement 9 von dem Zubereitungsgefäß 1 entfernt. Alternativ kann jedoch auch das Hitzeschutzelement 7 und/ oder das Gleitelement 9 zusammen mit dem Zubereitungsgefäß 1 einer Reinigung, bspw. in einer Geschirrspülmaschine, zugeführt werden. Dabei empfiehlt es sich insbesondere, dass das Hitzeschutzelement 7 und ggf. auch das Gleitelement 9 Öffnungen aufweisen, durch welche ggf. zwischen dem Gefäßboden 2 bzw. der Umfangswandung 8 und dem Hitzeschutzelement 7 bzw. dem Gleitelement 9 eingedrungene Flüssigkeit entfernt werden kann.

Je nach der Ausgestaltung, insbesondere Form und Dimension, des Gleitelementes 9, kann dieses auch als Stützelement für das Hitzeschutzelement 7 ausgebildet sein. Dies bietet sich insbesondere für solche Fälle an, in welchen das Hitzeschutzelement 7 eine geringe Shore-Härte aufweist. Dies erleichtert die Montage des Hitzeschutzelementes 7 an bzw. die Demontage von dem Zubereitungsgefäß 1.

### Liste der Bezugszeichen

- 1: Zubereitungsgefäß
- 2: Gefäßboden
- 3: Heizeinrichtung
- 4: Fußteil
- 5: Küchenmaschine
- 6: Basisgerät
- 7: Hitzeschutzelement
- 8: Umfangswandung
- 9: Gleitelement
- 10: Rührwerk
- 11: Deckel
- 12: Verriegelungswalzen
- 13: Griff
- 14: Display
- 15: Schalter
- 16: Messer
- 17: Messerlager
- 18: Welle

## Patentansprüche

1. Zubereitungsgefäß (1) mit einem Gefäßboden (2), einer Heizeinrichtung (3) und einem mit dem Gefäßboden (2) außenseitig verbindbaren Fußteil (4), wobei das Zubereitungsgefäß (1) über das Fußteil (4) mit einem Basisgerät (6) einer elektromotorisch betriebenen Küchenmaschine (5) verbindbar ist, **dadurch gekennzeichnet, dass** zwischen dem Gefäßboden (2) und dem Fußteil (4), insbesondere zwischen der Heizeinrichtung (3) und dem Fußteil (4), ein Hitzeschutzelement (7) mit einer Temperaturbeständigkeit von mindestens 160°C angeordnet ist.

2. Zubereitungsgefäß (1) nach Anspruch 1, **dadurch gekennzeichnet, dass** das Hitzeschutzelement (7) eine Silikonschicht, insbesondere eine fluorierte Silikonschicht, ist.

3. Zubereitungsgefäß (1) nach Anspruch 1 oder 2, **dadurch gekennzeichnet, dass** das Hitzeschutzelement (7) trennbar an dem Zubereitungsgefäß (1) und/oder dem Fußteil (4) angeordnet ist.

4. Zubereitungsgefäß (1) nach einem der vorhergehenden Ansprüche, **dadurch gekennzeichnet, dass** die Heizeinrichtung (3) in dem Gefäßboden (2) des Zubereitungsgefäßes (1) angeordnet ist.

5. Zubereitungsgefäß (1) nach einem der vorhergehenden Ansprüche, **dadurch gekennzeichnet, dass** das Hitzeschutzelement (7) zumindest einen Teilbereich des Gefäßbodens (2) bedeckt, insbesondere zumindest einen Teilbereich, welcher bei Abwesenheit des Hitzeschutzelementes (7) einen direkten mechanischen Kontakt zu dem Fußteil (4) aufweisen würde.

6. Zubereitungsgefäß (1) nach einem der vorhergehenden Ansprüche, **dadurch gekennzeichnet, dass** das Hitzeschutzelement (7) zumindest einen Teilbereich einer Umfangswandung (8) des Zubereitungsgefäßes (1) bedeckt.

7. Zubereitungsgefäß (1) nach Anspruch 6, **dadurch gekennzeichnet, dass** die Umfangswandung (8) eine Hinterschneidung und/oder eine Materialaussparung zur formkorrespondierenden Anlage des Hitzeschutzelementes (7), insbesondere nach der Art einer Presspassung, aufweist.

8. Zubereitungsgefäß (1) nach einem der vorhergehenden Ansprüche, **dadurch gekennzeichnet, dass** zwischen dem Hitzeschutzelement (7) und dem Fußteil (4) ein Gleitelement (9) aus einem Hartkunststoff, insbesondere einem Thermoplast oder Duroplast, angeordnet ist.

9. Zubereitungsgefäß (1) nach einem der vorhergehenden Ansprüche, **dadurch gekennzeichnet, dass** der Fußteil (4) zur Fixierung eines Rührwerkes (10), insbesondere eines Messerlagers (17), an dem Zubereitungsgefäß (1) ausgebildet ist.

10. Elektromotorisch betriebene Küchenmaschine (5) mit einem Basisgerät (6) und einem mit dem Basisgerät (6) verbindbaren Zubereitungsgefäß (1), insbesondere mit einem Zubereitungsgefäß (1) nach einem der vorhergehenden Ansprüche, wobei das Zubereitungsgefäß (1) einen Gefäßboden (2), eine Heizeinrichtung (3) und einen mit dem Gefäßboden (2) außenseitig verbindbaren Fußteil (4) aufweist, wobei das Zubereitungsgefäß (1) über das Fußteil (4) mit dem Basisgerät (6) verbindbar ist, **dadurch gekennzeichnet, dass** das Zubereitungsgefäß (1) zwischen dem Gefäßboden (2) und dem Fußteil (4), insbesondere zwischen der Heizeinrichtung (3) und dem Fußteil (4), ein Hitzeschutzelement (7) aufweist.
